## Europäisches Patentamt
## European Patent Office
## Office européen des brevets

(19)

(11) Numéro de publication: **0 191 836**
**B1**

(12)

# FASCICULE DE BREVET EUROPÉEN

(45) Date de publication du fascicule du brevet:
**15.11.89**

(21) Numéro de dépôt: **85904256.6**

(22) Date de dépôt: **27.06.85**

(86) Numéro de dépôt international:
**PCT/FR 85/00229**

(87) Numéro de publication internationale:
**WO 86/01669 (13.03.86 Gazette 86/06)**

(51) Int. Cl.⁴: **H 04 R 1/02,** H 04 R 3/12,
B 60 N 3/14, H 05 K 11/02

(54) **APPAREIL AMOVIBLE DE SONORISATION OU/ET DE VISUALISATION.**

(30) Priorité: **29.06.84 FR 8413560**

(43) Date de publication de la demande:
**27.08.86 Bulletin 86/35**

(45) Mention de la délivrance du brevet:
**15.11.89 Bulletin 89/46**

(84) Etats contractants désignés:
**AT BE CH DE FR GB IT LI LU NL SE**

(56) Documents cité:
**EP-A-0 033 769**
**DE-A-2 249 130**
**FR-A-2 479 616**
**US-A-2 934 639**
**US-A-3 541 452**
**US-A-4 234 766**

(73) Titulaire: **CORDIER, Laurent, 70, rue de Vesle,
F-51100 Reims (FR)**

(72) Inventeur: **CORDIER, Laurent, 70, rue de Vesle,
F-51100 Reims (FR)**

(74) Mandataire: **Gérardin, Robert Jean René, Cabinet
Robert Gérardin 3A, avenue Georges
Clémenceau Boîte Postale 2 719, F-51055 Reims
Cédex (FR)**

EP 0 191 836 B1

## Description

L'invention concerne un appareil amovible de sonorisation ou/et de visualisation.

Il est connu de sonoriser des magasins et des lieux publics par l'intermédiaire de haut-parleurs disposés à certains endroits et diffusant la même musique et les mêmes messages au même moment par l'intermédiaire d'installations assez complexes et centralisées, nécessitant des câbles encombrants et disgracieux.

Il est connu aussi, d'éclairer ponctuellement certaines parties de locaux par l'intermédiaire de projecteurs ou spots, fixés à des rails permettant une certaine latitude de positionnement. Ces moyens d'éclairage sont constitués d'une lampe, fixée et alimentée en courant électrique par l'intermédiaire d'une douille à vis ou à baïonnette, solidaire d'un dispositif articulé et coulissant monté sur un rail fixé au plafond ou contre les murs. Cette lampe est généralement montée dans un boîtier qui réduit la dispersion des rayons lumineux et concentre ceux-ci sur un endroit précis.

La présente invention a pour but de remédier à ces inconvénients. L'invention, telle qu'elle est caractérisée dans la revendication résout le problème consistant à créer un appareil amovible de sonorisation ou/et de visualisation utilisant les mêmes moyens de fixation et d'alimentation pour la sonorisation et éventuellement la visualisation que pour l'éclairage ou l'alimentation électrique d'appareils, c'est-à-dire, en utilisant l'infrastructure de l'éclairage localisé, telle que décrite au paragraphe ci-dessus, et à individualiser la sonorisation ou/et la visualisation, selon l'endroit, par l'intermédiaire d'un appareil amovible conçu spécialement pour cette utilisation et ce mode de fixation et d'alimentation.

L'appareil de sonorisation ou/et de visualisation selon l'invention se caractérise principalement en ce que sa fixation et sa connexion aux réseaux s'effectuent par l'intermédiaire d'un unique dispositif, constitué d'un système à vis ou à baïonnette identique à celui utilisé habituellement pour la fixation et l'alimentation électrique des ampoules d'éclairage.

Sa fréquence de réception peut-être réglée sur la fréquence d'émission d'un émetteur central situé dans le même local ou le même établissement à des fins de diffusion de musique et de messages.

Il peut-être combiné à une lampe d'éclairage dont la mise sous tension s'effectue à volonté, indépendamment de celle de l'appareil.

Cet appareil est entièrement étanche.

Ainsi, comme on le voit, cet appareil pourra, dans son utilisation la plus générale, se monter à volonté dans un projecteur ou spot d'éclairage, afin de constituer un dispositif son et lumière particulier avec les autres projecteurs ou spots réservés uniquement à l'éclairage, situés à proximité sur le même rail support ou sur des rails voisins.

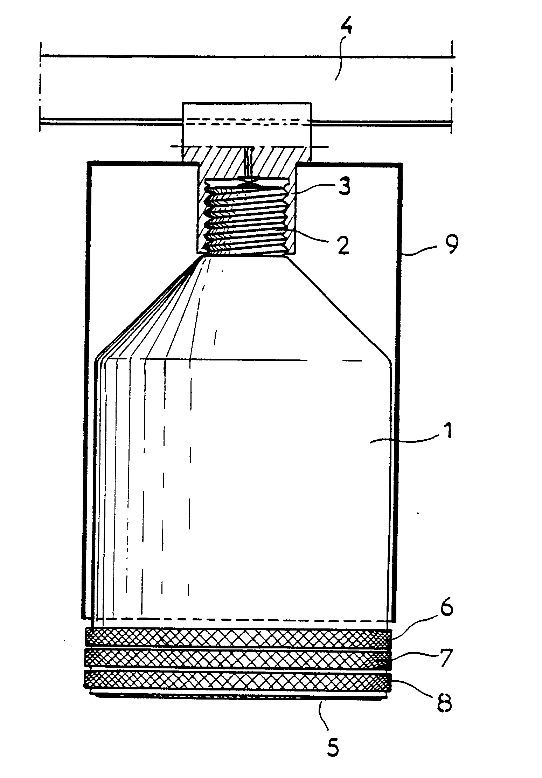

D'autres caractéristiques et avantages apparaîtront dans la description qui va suivre d'un appareil de sonorisation selon l'invention donné à titre d'exemple au regard du dessin annexé représentant l'appareil substitué à une ampoule d'éclairage dans un spot fixé à un rail.

En examinant la figure on remarque que dans l'exemple représenté, correspondant à un poste de radio, l'appareil est constitué d'un corps 1, formant boîtier, comportant, à l'une de ses extrémités, un culot à vis 2 muni de contacts permettant le raccordement au réseau, par l'intermédiaire d'une douille à vis classique 3 montée sur un rail 4 et, à l'autre extrémité, un haut-parleur 5 ou un écran de visualisation. La sélection des gammes d'ondes, la sélection de fréquence, la mise en fonction et le réglage du volume sonore s'effectuent respectivement par l'intermédiaire des bagues rotatives 6, 7 et 8 ou par l'intermédiaire de boutons. L'appareil peut se monter à la place d'une ampoule d'éclairage notamment à l'intérieur du boîtier 9 d'un projecteur ou spot d'éclairage, puisque sa forme et ses dimensions ont été déterminées en conséquence.

Rien ne s'oppose à ce que le haut-parleur soit complété par un écran de visualisation, sous réserve que ce dernier réponde à certaines caractéristiques particulières.

Cet appareil peut-être conçu pour fonctionner de façon autonome en ne recevant, par l'intermédiaire du dispositif de raccordement, que le courant électrique nécessaire à son fonctionnement en se substituant à une ampoule électrique, ou pour convertir en images et en sons des signaux transmis par le câble d'alimentation électrique ou par des conducteurs séparés et raccordés à un émetteur central autonome.

Le dispositif de fixation et d'alimentation est, dans un mode de réalisation préférentiel, constitué d'un système à vis ou à baïonnette utilisé pour l'alimentation des lampes d'éclairage, mais d'autres dispositifs, permettant à l'appareil de recevoir la fois, l'énergie électrique et les signaux nécessaires à son fonctionnement, sont envisageables, le système de fixation par vis ou baïonnette pouvant néanmoins être conservé comme moyen de raccordement.

Cet appareil présente la particularité de pouvoir se monter sur n'importe quelle douille, à la place d'une lampe d'éclairage, et, cela, afin d'être utilisé pour la diffusion de musique et de messages dans les magasins, les lieux publics, ou tout autre endroit nécessitant une sonorisation, sans recourir à une installation complexe et coûteuse.

## Revendications

1. Appareil amovible de sonorisation ou/et de visualisation destiné à se loger dans l'espace réservé habituellement à une ampoule d'éclairage, dont la fixation et la connexion s'effectuent par le même moyen et dont la mise sous tension et les réglages s'effectuent sur le corps (1) de l'appareil caractérisé en ce que le moyen utilisé pour assurer sa fixation et sa connexion est constitué d'un système à vis (2) ou à baïonnette identique à celui utilisé pour la fixation et l'alimentation électrique des ampoules d'éclairage, en ce que sa fréquence de réception peut être réglée sur la fréquence d'émission d'un émetteur central, situé dans le même local ou le même établissement, à des fins de diffusions de musique et de messages et en ce qu'il est entièrement étanche.

2. Appareil selon la revendication 1 caractérisé en ce qu'il peut être combiné à une lampe d'éclairage dont la mise sous tension s'effectue à volonté, indépendamment de celle de l'appareil.

**Patentansprüche**

1. Lösbare/abnehmbare Schall- und/oder Anzeigevorrichtung, die in einer üblicherweise für eine Glühbirne bestimmten Halterung angebracht werden soll, deren Befestigung und Anschluß auf dieselbe Art und Weise erfolgt und deren Spannungsbeaufschlagung sowie Einstellungen an dem Körper (1) der Vorrichtung erfolgen, dadurch gekennzeichnet, daß das Mittel zu deren Befestigung und Anschluß aus einem Gewindesystem (2) oder einem Bajonettsystem identisch dem für die Befestigung und Stromspeisung von Glühbirnen verwendeten besteht, daß ihre Empfangsfrequenz auf die Sendefrequenz eines zentralen Senders einstellbar ist, welcher sich in demselben Raum oder demselben Gebäude befindet, zum Zwecke der Diffusion von Musik und Nachrichten, und daß diese absolut dicht ausgebildet ist.

2. Vorrichtung nach Anspruch 1, dadurch gekennzeichnet, daß diese mit einer Beleuchtungslampe kombinierbar ist, deren Spannungsbeaufschlagung nach Bedarf, unabhängig von der der Vorrichtung, erfolgt.

**Claims**

1. Removable sound irradiation and/or display apparatus for fitting in the space usually intended for a lighting bulb, the fixing and connection of which are effected by the same means and the switching on and adjustments of which are carried out on the body (1) of the apparatus, characterized in that the means used to effect fixing and connection consist in a screw-type (2) or bayonet-type system identical with the one used for fixing light bulbs and supplying them with electricity, and in that the reception frequency of the apparatus may be set to the transmission frequency of a central transmitter, situated in the earns room or the same premises, for the purpose of music and message transmission, and in that it is completely waterproof.

2. Apparatus according to claim 1, characterized in that it may be combined with a lighting lamp which may be switched on at will, independently of the apparatus.